# EUROPEAN PATENT SPECIFICATION

(11) **EP 3 229 631 B1**
(45) Date of publication and mention of the grant of the patent: **21.08.2019**
(21) Application number: 15787393.6
(22) Date of filing: 16.10.2015
(51) Int. Cl.: A43B 1/04, A43B 23/02, A43D 3/02, B29C 67/00, D04C 3/00, A43D 1/02, B62D 33/04, A43D 111/00, D04C 1/06, D04C 3/48, B33Y 80/00, B29C 64/00

(54) **PORTABLE MANUFACTURING SYSTEM FOR ARTICLES OF FOOTWEAR**
TRAGBARES SYSTEM ZUR HERSTELLUNG EINES SCHUHARTIKELS
SYSTÈME DE FABRICATION PORTABLE POUR ARTICLES CHAUSSANTS

(30) Priority: 10.12.2014 US 201414565582
(43) Date of publication of application: 18.10.2017
(73) Proprietor: NIKE Innovate C.V., Beaverton, OR 97005-6453 (US)
(72) Inventor: BRUCE, Robert, M., Beaverton, OR 97005-6453 (US); LEE, Eun, Kyung, Beaverton, OR 97005-6453 (US); SILLS, Craig, K., Beaverton, OR 97005-6453 (US)
(74) Representative: Beattie, Alex Thomas Stewart
(86) International application number: PCT/US2015/055884
(87) International publication number: WO 2016/093955

(56) References cited:
- WO-A1-2009/000371
- DE-A1-102011 009 641
- GB-A- 1 196 983
- US-A1- 2005 178 026
- Anonymous: "3D print shoe last", styleforum, 19 February 2014 (2014-02-19), pages 1-4, XP055241611, Retrieved from the Internet: URL:http://www.styleforum.net/t/137783/3d- print-shoe-last [retrieved on 2016-01-14]
- Ricardo Bilton: "How 3D body scanning will help you find a suit that actually fits |/how-3d-body-scanning-will-he", , 2 May 2013 (2013-05-02), XP055241783, Retrieved from the Internet: URL:http://venturebeat.com/2013/05/02/how- 3d-body-scanning-will-help-you-find-a-suit -that-actually-fits/ [retrieved on 2016-01-15]

## Description

### BACKGROUND

The present embodiments relate generally to manufacturing systems for articles of footwear.

Articles of footwear often include an upper and a sole structure. The upper is made by assembling many different components, including various layers, sections or segments of material. These components may be made from stock textile materials such as fabrics and leather goods.

US2013/0305465 and DE 10 2011 009 641 A1 disclose a method for producing an upper part of a shoe, in particular of a sports shoe. To obtain a shoe upper part with enhanced wearing comfort the method comprises according to the invention the steps: a) Supplying at least one shoe last which corresponds to the inner shape of the upper part of the shoe which is to be produced; b) Applying a radial braiding machine having an annular creel which is designed for weaving and/or braiding along three axes; c) Guiding the at least one shoe last through the center of the creel and simultaneously weaving and/or braiding along three axes using a fiber material, and therefore woven and/or braided material positions itself around the outer circumference of the shoe last d) Once the at least one shoe last has been guided through the center of the creel Terminating the weaving and/or braiding and removing the woven and/or braided material from the shoe last e) Further processing the woven and/or braided material to complete the shoe.

Aspects of the invention are set out in the accompanying claims.

### SUMMARY

In one aspect, a method of making an article of footwear includes the features of claim 6.

In another aspect, a manufacturing system includes the features of claim 1.

Other systems, methods, features and advantages of the embodiments will be, or will become, apparent to one of ordinary skill in the art upon examination of the following figures and detailed description.

### BRIEF DESCRIPTION OF THE DRAWINGS

The embodiments can be better understood with reference to the following drawings and description. The components in the figures are not necessarily to scale, emphasis instead being placed upon illustrating the principles of the embodiments. Moreover, in the figures, like reference numerals designate corresponding parts throughout the different views.
FIG. 1 is a schematic view of an embodiment of a portable housing for a portable manufacturing system;
FIG. 2 is a schematic view of an embodiment of an interior of a portable housing for a portable manufacturing system;
FIG. 3 is a schematic view of an embodiment of a storage rack for storing spools of thread in a portable manufacturing system;
FIG. 4 is an embodiment of a process for manufacturing an article of footwear;
FIG. 5 is a schematic view of an embodiment of a step of receiving customized foot information using a capturing system;
FIG. 6 is a schematic view of another embodiment of a step of receiving customized foot information using a capturing system;
FIGS. 7-9 are schematic views of an embodiment of steps of forming a customized last using an additive manufacturing system;
FIGS. 10-12 are schematic views of an embodiment of steps of inserting a customized last through a braiding device to form a braided component on the customized last;
FIG. 13 is a schematic view of an embodiment of a step of removing excess material from a braided component;
FIG. 14 is a schematic view of an embodiment of a step of removing a customized last from a braided component;
FIG. 15 is a schematic view of an embodiment of a step of forming sole components using an additive manufacturing system;
FIG. 16 is a schematic view of an embodiment of a step of forming an overlay component using an additive manufacturing system;
FIG. 17 is a schematic view of an embodiment of a braided component in the form of a footwear upper, an associated overlay component, and two sole components;
FIG. 18 is a schematic view of an embodiment of a step of attaching an overlay component to a braided component using a welding system;
FIG. 19 is a schematic view of an embodiment of an article of footwear with a braided component;
FIG. 20 is a schematic view of a customer wearing a pair of articles that have been manufactured with a portable manufacturing system; and
FIGS. 21 is a schematic view of a portable manufacturing system temporarily located in the parking lot of a stadium, according to an embodiment.

### DETAILED DESCRIPTION

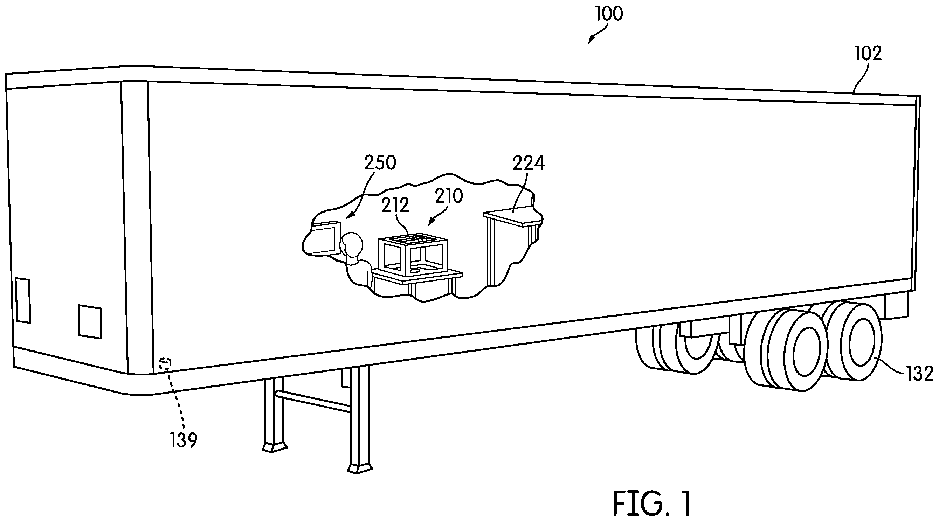

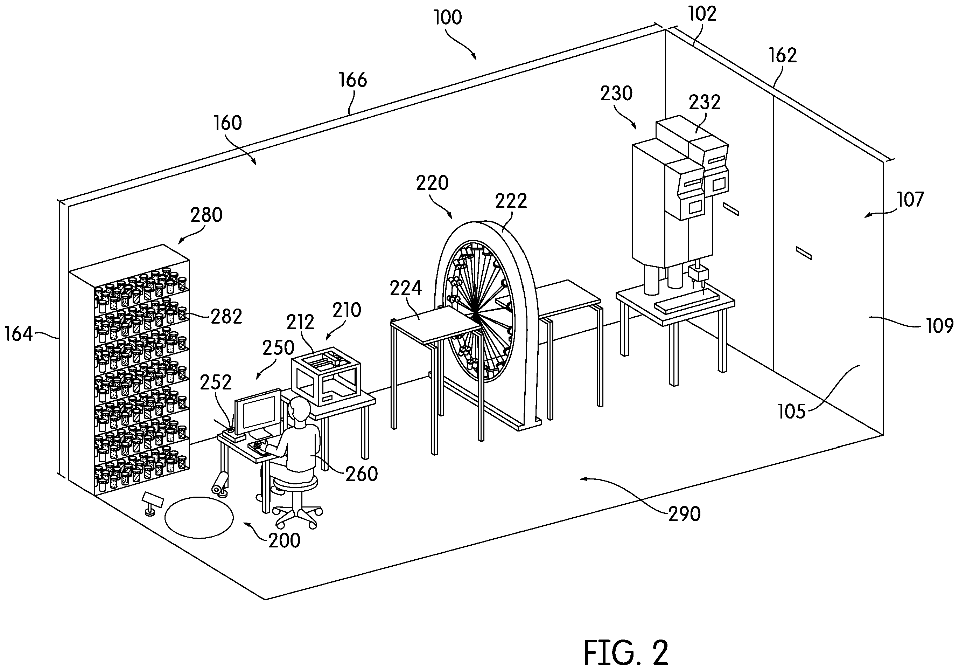

FIG. 1 is a schematic exterior view of an embodiment of a portable housing 102 for a portable manufacturing system 100. FIG. 2 illustrates a schematic interior view of portable housing 102, including various components of portable manufacturing system 100 that are disposed within portable housing 102. The term "housing" as used throughout this detailed description and in the claims refers to any housing, enclosure, container or other structure that can be configured to store one or more devices, components and/or systems of a portable manufacturing system. Moreover, as used herein, "portable housing" refers to any housing, enclosure, container or other structure that may be moved from one location to another. Specifically, a portable housing may be any housing not permanently secured to a ground surface, attached to another building or otherwise incapable of being displaced by a moving apparatus (such as a truck, crane or other device for moving portable structures).

The exemplary embodiment depicts portable housing 102 in the form of a trailer. More specifically, in the exemplary embodiment, portable housing 102 could be a detachable semi-trailer. In other embodiments, portable housing 102 could be a permanently attached compartment in a truck.

As seen in FIG. 1, portable housing 102 may include provisions to facilitate moving portable housing 102 from one location to another. In some embodiments, portable housing 102 may incorporate a towing system. As used herein, the term "towing system" refers to any system, assembly, device and/or component that allows portable housing to be attached to, and towed by, a towing vehicle. A towing vehicle could be a tractor, truck (e.g., pick-up truck, tow-truck or any other kind of truck) as well as any other kind of vehicle capable of towing portable housing 102. In the exemplary embodiment shown in FIG. 1, portable housing 102 includes a towing system 139. In one embodiment, towing system 139 may be a kingpin, which may be connected to a fifth wheel of a tractor unit. However, other embodiments of portable housing 102 could utilize any other components of towing systems known in the art. In some embodiments, portable housing 102 may also include two or more wheels 132 that allow portable housing 102 to be towed.

More generally, portable housing 102 could incorporate various kinds of attachment features that facilitate the attachment of portable housing 102 to any other vehicle (e.g., a truck), machine (e.g., a crane) and/or device. Exemplary attachment features include, but are not limited to, trailer hitches, braces, hooks, catches and/or other kinds of features that may be engaged for towing, lifting or otherwise moving portable housing 102.

In addition, portable housing 102 could include provisions for entering and exiting portable housing 102. In some embodiments, portable housing 102 could include a door and/or stairs. A door may provide access to at least one interior compartment portable housing 102. Of course, in other embodiments, other provisions for entering and/or exiting portable housing 102 could be included. In one embodiment, a rearward end of portable housing 102 could include doors 109, as seen in FIG. 2.

It will be understood that other embodiments could take the form of any other type of portable housing 102. It is contemplated, for example, that in an alternative embodiment a portable housing could take the form of a shipping container or other cargo container. Further, while the exemplary embodiment depicts portable housing 102 as fully enclosing the interior of portable housing 102, other embodiments could only be partially enclosed. In another embodiment, for example, portable housing 102 could take the form of a flat-bed trailer without one or more sidewalls and/or roof.

Referring now to FIG. 2, portable housing 102 includes a housing interior 107 with at least one interior compartment 160. Various components of portable manufacturing system 100 may be disposed within interior compartment 160. Portable manufacturing system 100 includes a capturing station 200, which includes devices for capturing customized foot information from one or more feet. Additionally, portable manufacturing system 100 includes an additive manufacturing station 210, a braiding station 220 and a welding station 230. Additionally, portable manufacturing system 100 also includes at least one set of storage racks 280 and a computing system 250. Of course, this list of stations, systems and components is not intended to be exhaustive and in other embodiments, portable manufacturing system 100 may include additional stations, systems and/or components.

Capturing station 200 includes provisions for capturing information about a customer's feet. Specifically, in some embodiments, capturing station 200 may include provisions to capture geometric information about one or more feet. This geometric information can include size (e.g., length, width and/or height) as well as three-dimensional information corresponding to the customer's feet (e.g., forefoot geometry, midfoot geometry, heel geometry and ankle geometry). In at least one embodiment, the captured geometric information for a customer's foot can be used to generate a three-dimensional model of the foot for use in later stages of manufacturing. For purposes of convenience, the term "customized foot information" is used throughout the detailed description and in the claims to refer to any information related to the size and/or shape of a foot. In particular, customized foot information can include at least the width and length of the foot. In some cases, customized foot information may include information about the three-dimensional foot geometry. Customized foot information can be used to create a three-dimensional model of the foot.

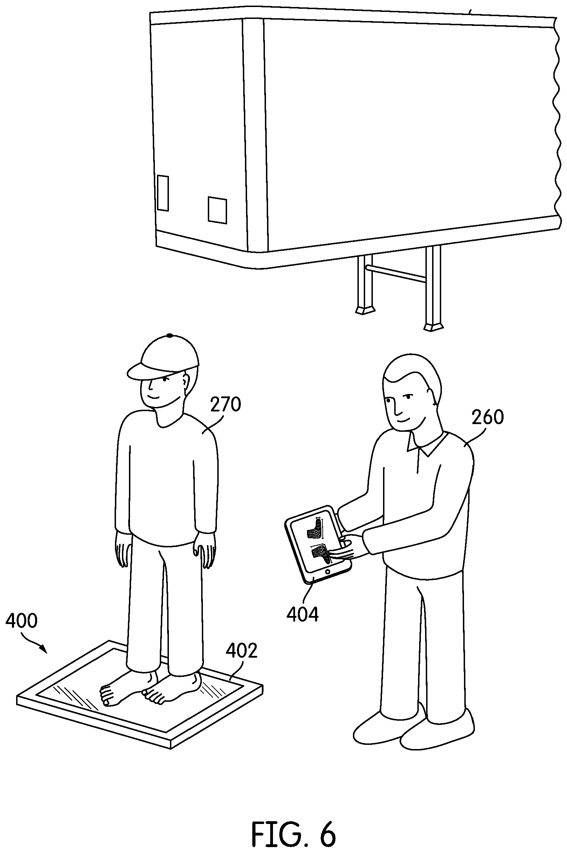

Embodiments may include any other provisions for capturing customized foot information. In an alternative embodiment, for example, portable manufacturing system 100 may use a foot scanning device 402, as shown in FIG. 6 and discussed in further detail below.

Additive manufacturing station 210 includes an additive manufacturing device 212. The term "additive manufacturing device", also referred to as "three-dimensional printing", refers to any device and technology for making a three-dimensional object through an additive process where layers of material are successively laid down under the control of a computer. Exemplary additive manufacturing techniques that could be used include, but are not limited to: extrusion methods such as fused deposition modeling (FDM), electron beam freeform fabrication (EBF), direct metal laser sintering (DMLS), electron-beam melting (EBM), selective laser melting (SLM), selective heat sintering (SHS), selective laser sintering (SLS), plaster-based 3D printing, laminated object manufacturing (LOM), stereolithography (SLA) and digital light processing (DLP). In one embodiment, additive manufacturing device 212 could be a fused deposition modeling type printer configured to print thermoplastic materials such as acrylonitrile butadiene styrene (ABS) or polyactic acid (PLA).

An example of a printing device using fused filament fabrication (FFF) is disclosed in Crump, U.S. Patent Number 5,121,329, filed October 30, 1989 and titled "Apparatus and Method for Creating Three-Dimensional Objects," which application is referred to hereafter as the "3D Objects" application.

Additive manufacturing device 212 is used to form a footwear last (or simply "last"), which may be used in forming an upper of an article of footwear, and at least one overlay component. Additionally, in at least some embodiments, additive manufacturing device 212 could be used to form other components for an article of footwear, including, but not limited to: sole components (e.g., insole components, midsole components and/or outsole components), trim components, eye-stays, panels or other portions for an upper, as well as possibly other components. Such provisions may utilize any of the systems and/or components disclosed in Sterman, U.S. Patent Publication Number US 2015 321 418, now U.S. Patent Application Number 14/273,726, filed May 9, 2014, and titled "System and Method for Forming Three-Dimensional Structures".

Embodiments can include provisions for forming an upper on a customized last. The invention includes a braiding station 220, which may facilitate forming a braided upper over a customized last. In the exemplary embodiment of FIG. 2, braiding station 220 includes a braiding device 222. Braiding device 222 includes provisions for over-braiding strands onto a customized last.

In some embodiments, braiding station 220 may also include provisions for holding and/or feeding articles through braiding device 222. For example, some embodiments may include support platforms 224 that can facilitate feeding articles through braiding device 222. Generally, any systems known in the art for feeding objects through a braiding machine could be used. In some embodiments, a conveyor system could be used to automatically move a footwear last through braiding device 222. In some cases, such a conveyor system could be integrated into support platforms 224. In some other embodiments, each footwear last could be manually inserted through braiding device 222.

The invention includes provisions for bonding together two or more components of an article of footwear. In some embodiments, these provisions may include a welding station 230. Welding station may further include a welding device 232. Exemplary welding technologies that could be used include, but are not limited to: high frequency welding, ultrasonic welding, friction welding, laser welding as well as possibly other kinds of welding known in the art for joining two materials to form part of an article of footwear.

Portable manufacturing system 100 can include provisions to control and/or receive information from one or more devices. In the exemplary embodiment, for example, portable manufacturing system 100 can include provisions to communicate with components of capturing station 200, additive manufacturing device 212, braiding device 222 and/or welding device 232 as well as possibly other devices or systems that are part of portable manufacturing system 100. Optionally, embodiments using a foot scanning device may include provisions to additionally communicate with the foot scanning device.

These provisions can include a computing system 250 and a network. In the exemplary embodiment of FIG. 2, a network for portable manufacturing system 100 is represented by networking device 252 (e.g., a wireless router) though the network may generally comprise any number of links and nodes. Generally, the term "computing system" refers to the computing resources of a single computer, a portion of the computing resources of a single computer, and/or two or more computers in communication with one another. Any of these resources can be operated by one or more human users. In some embodiments, computing system 250 may include one or more servers. In some cases, a separate server (not shown) may be primarily responsible for controlling and/or communicating with devices of portable manufacturing system 100, while a separate computer (e.g., desktop, laptop or tablet) may facilitate interactions with a user or operator. Computing system 250 can also include one or more storage devices including but not limited to magnetic, optical, magneto-optical, and/or memory, including volatile memory and non-volatile memory.

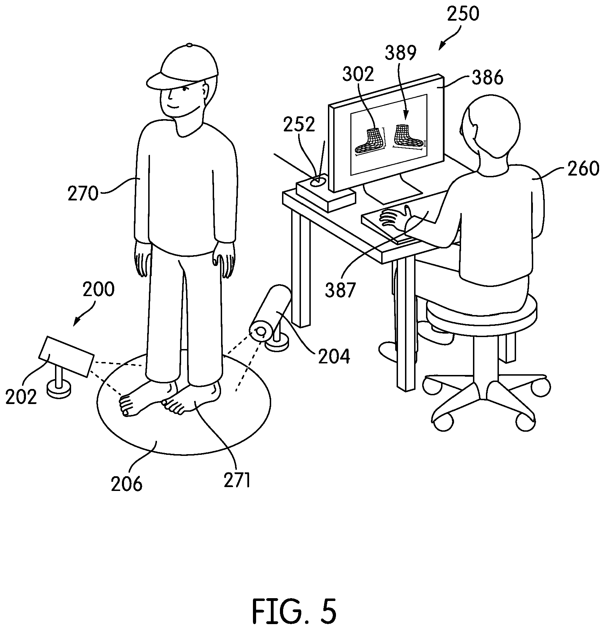

As better shown in FIG. 5, computing system 250 may comprise a viewing interface 386 (e.g., a monitor or screen), input devices 387 (e.g., keyboard and mouse), and software for designing a computer-aided design ("CAD") representation 389 of a three-dimensional model. In at least some embodiments, the CAD representation 389 can provide a representation of a footwear last. Also, in at least some embodiments, computing system 250 may be configured to provide CAD representations for sole components, overlay components, trim components, as well as possibly other components or elements that may be manufactured as part of an article of footwear.

In some embodiments, computing system 250 may be in direct contact with one or more devices or systems of portable manufacturing system 100 via a network. The network may include any wired or wireless provisions that facilitate the exchange of information between computing system 250 and devices of portable manufacturing system 100. In some embodiments, the network may further include various components such as network interface controllers, repeaters, hubs, bridges, switches, routers (e.g., networking device 252), modems and firewalls. In some cases, the network may be a wireless network that facilitates wireless communication between two or more systems, devices and/or components of portable manufacturing system 100. Examples of wireless networks include, but are not limited to: wireless personal area networks (including, for example, Bluetooth), wireless local area networks (including networks utilizing the IEEE 802.11 WLAN standards), wireless mesh networks, mobile device networks as well as other kinds of wireless networks. In other cases, the network could be a wired network including networks whose signals are facilitated by twister pair wires, coaxial cables, and optical fibers. In still other cases, a combination of wired and wireless networks and/or connections could be used.

As seen in FIG. 2, in some embodiments portable manufacturing system 100 may be operated by an operator 260. Operator 260 may be any person configured to operator one or more systems or devices of portable manufacturing system 100. For purposes of clarity, the embodiment of FIG. 2 illustrates the use of a single operator for operating each station or device of portable manufacturing system. However, in other embodiments it is contemplated that multiple users could use the systems and/or devices of portable manufacturing system 100.

In some embodiments, portable manufacturing system 100 may include provisions for storing manufacturing materials. Exemplary materials that could be stored within portable manufacturing system 100 include, but are not limited to: materials used for making uppers, materials for making sole structures as well as possibly other materials. Materials for making uppers may include, but are not limited to: textile materials (including woven and non-woven fabrics), leather materials (including synthetic and natural leathers), plastic materials (e.g., for toe caps, heel cups, eyelets, straps, or other fasteners), metal materials (e.g., for toe caps, zippers and other kinds of fastening devices), as well as any other kinds of materials known in the art for manufacturing articles of footwear. Materials for making sole structures may include materials for making insoles, midsoles, outsoles as well as discrete sole components such as bladders or other cushioning devices. Exemplary materials may include, but are not limited to: foams, plastics, rubbers, as well as possibly other kinds of materials.

Some embodiments may include provisions for limiting the number of materials required to manufacture an article of footwear within portable manufacturing system 100. For example, in some embodiments utilizing a braiding device for making an upper, the materials used to manufacture the upper may primarily be comprised of various kinds of tensile elements (or tensile strands) that can be formed into an upper using the braiding device. Such tensile elements could include, but are not limited to: threads, yarns, strings, wires, cables as well as possibly other kinds of tensile elements. As used herein, tensile elements may describe generally elongated materials with lengths much greater than corresponding diameters. In other words, tensile elements may be approximately one-dimensional elements, in contrast to sheets or layers of textile materials that may generally be approximately two-dimensional (e.g., with thicknesses much less than their lengths and widths). The exemplary embodiment illustrates the use of various kinds of threads, however it will be understood that any other kinds of tensile elements that are compatible with a braiding device could be used in other embodiments.

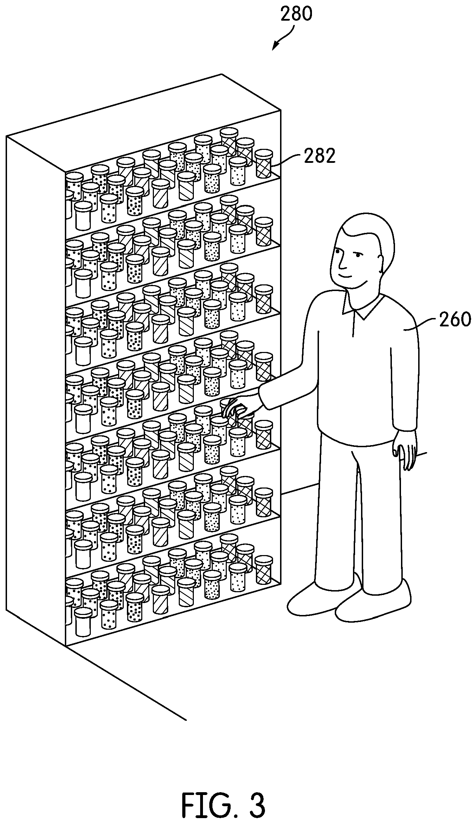

As shown in FIGS. 2 and 3, portable manufacturing system 100 may include storage rack 280 for storing one or more kinds of manufacturing materials. In the exemplary embodiment of FIGS. 2 and 3, storage rack 280 is seen to store a plurality of spools 282 with various kinds of threads. The threads may vary in color, diameter, tensile strength as well as any other possible characteristics. Some embodiments could be configured to store a wide range of thread types (e.g., many different colors and/or many different diameters), while other embodiments could be configured to store a relatively narrow range of thread types (e.g., two colors of thread).

With this arrangement, operator 260 may easily select various spools for use with braiding device 222. In some embodiments, prior to manufacturing a customized article of footwear, operator 260 could select desirable candidate thread materials from storage rack 280. Such candidate thread materials could be selected according to a variety of different factors, including manufacturing considerations as well as customer preferences. For example, in some embodiments, a customer may select custom colors for an article of footwear, and operator 260 may therefore select corresponding candidate thread materials having the user selected colors. Further, in some cases, a customer may have the option to select performance and/or comfort properties for the article of footwear. As an example, a customer could select to have an article with a high degree of comfort, and the operator could correspondingly select threads with a high degree of elasticity to improve stretch and fit for the manufactured article of footwear. As another example, a customer could select to have an article with maximum support, and the operator could correspondingly select threads with low elasticity (and high tensile strength) to reduce stretching and give during various kinds of dynamic motions (e.g., cutting).

It should therefore be appreciated that portable manufacturing system 100 is capable of producing articles having a wide range of properties (e.g., color, tensile strength, elasticity, breathability as well as other properties) while minimizing the number of distinct material inputs required for manufacturing the upper. This is accomplished by forming most or all portions of the upper from threads or other tensile materials that can be easily stored within portable manufacturing system 100. Moreover, this may be in contrast to other kinds of manufacturing systems that require a large number of material inputs (e.g., multiple kinds of fabrics, leathers and other material elements). In these alternative manufacturing systems, it may not be feasible to store a large stock of different material components having different colors, strengths, etc. within a portable housing, such as a trailer.

Referring back to FIG. 2, the exemplary embodiment depicts one possible configuration of components (e.g., stations and devices) within portable housing 102. In an exemplary embodiment, each station or device is stored and operated within the interior of portable housing 102. Specifically, the walls (including doors), floor and ceiling of portable housing 102 may define an outer housing boundary 105, which further defines a housing interior 107 that is disposed within outer housing boundary 105. In the exemplary embodiment seen in FIG. 2, all the stations of portable manufacturing system 100 are stored within, and operated within, housing interior 107. In particular, capturing station 200, additive manufacturing station 210, braiding station 220 and a welding station 230, as well as computing system 250 and storage racks 280 are all housed and operated within housing interior 107. This arrangement allows for a compact storage and operating area for making customized articles of footwear.

The low footprint of portable manufacturing system 100, defined by housing interior 107 in at least some embodiments, may allow for the use of portable manufacturing system 100 at any remote location where portable housing 102 can be delivered (e.g., by towing) and where portable housing 102 can fit (e.g., in a parking space for a trailer). This allows portable manufacturing system 100 to be delivered to, for example, a retail location (such as a store front). Such a system could also be used on location at various sporting events. In such situations, fans at a sporting event could have customized articles manufactured for them at the location of a sporting event.

Although the embodiment depicted in FIG. 2 includes each station disposed and operated within housing interior 107, other embodiments may differ from this configuration. As an example, FIG. 6 illustrates an alternative arrangement where a capturing station 400 is operated outside of portable housing 102 (and thus outside of housing interior 107).

Referring back to FIG. 2, in the exemplary configuration, each station is aligned in a generally linear arrangement along a lengthwise dimension of portable housing 102. In some cases, each station could be disposed against, or near, a sidewall of portable housing 102. Of course, such a configuration is only exemplary and other embodiments could have each station arranged in any other configuration within portable housing 102.

Embodiments can include provisions for ensuring that an article of footwear can be manufactured within portable housing 102. In some embodiments, stations, devices and other components can be arranged within portable housing 102 such that a working area 290 is available to operator 260 for operating one or more stations, systems and/or devices while operator 260 stays inside housing interior 107. The term "working area" as used throughout this detailed description and in the claims refers to the available area within housing interior 107 where an operator, customer, or other user can stand or move in order to access, use or operate the stations, systems and/or devices. In an exemplary embodiment, working area 290 is large enough to accommodate operator 260 walking between each station, and also standing at and operating the devices of each station.

In the embodiment of FIG. 2, portable housing 102 is configured with a length 166, a width 162 and a height 164. In different embodiments, the absolute and/or relative values of these dimensions could vary. In some embodiments, length 166 could have a value in the range between 5 meters and 16 meters. In addition, in some embodiments, width 162 could have a value in the range between 1 meter and 5 meters. In addition, in some embodiments, height 164 could have a value in the range between 1 meter and 5 meters. In one exemplary embodiment, length 166 could have a value of approximately 14.6 meters, width 162 could have a value of approximately 2.6 meters and height 164 could have a value of approximately 2.8 meters.

The approximate area of working area 290 could vary in different embodiments. In some embodiments, working area 290 may have a value in the range between 10 to 90 percent of the maximum available floor space in portable housing 102 (e.g., the area determined as the length 166 times the width 162). Moreover, in at least some embodiments, working area 290 may be dimensioned to ensure at least one operator is able to stand, sit and/or move through working area 290 in order to operate each of capturing station 200, computing system 250, additive manufacturing station 210, braiding station 220 and welding station 230.

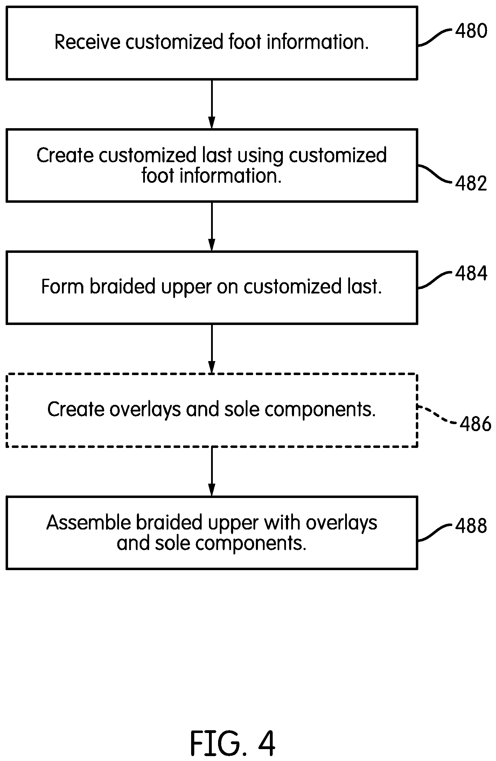

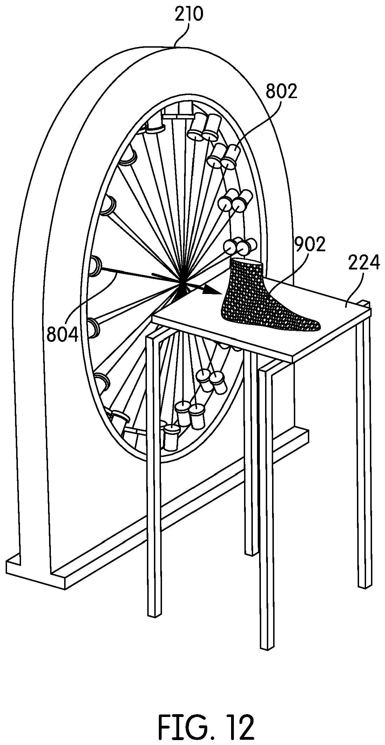

FIG. 4 illustrates a method of manufacturing a customized article of footwear using portable manufacturing system 100. Further, FIGS. 5-20 illustrate embodiments of various steps in the manufacturing process depicting at least some of the steps described in FIG. 4. It will be understood that this method is not intended to be limiting and is only intended to illustrate one possible method for manufacturing a customized article with portable manufacturing system 100. Moreover, some of the steps shown in FIGS. 5-20 may be optional. Also, the order of steps may be interchanged in some other embodiments.

During a first step 480 of the process shown in FIG. 4, information about a customer's foot is received. Such information, hereby referred to as "customized foot information", may include any information about the size and/or shape of a customer's foot. Size information can include, but is not limited to, a general foot size, foot width, foot length as well as the dimensions of the foot at particular locations of the foot (e.g., the width at the ball of the foot, the width at the arch of the foot and the width at the heel of the foot). Shape or geometric information can include information related to the shape of the sole of the foot, as well as the shape of the entire foot, including three-dimensional shape information. Three-dimensional foot information can include information about the locations of deviations from a typical foot shape (such as the locations and/or shapes of bunions, information about a flat arch, etc.). Three-dimensional foot information could also include a three-dimensional model or representation of the foot (using, for example, point cloud or wire mesh models).

After the customized foot information has been received (or retrieved), an operator creates a customized last corresponding to the customized foot information during step 482. The customized last is manufactured using an additive manufacturing system, such as a three-dimensional printer (i.e., "3-D printer"). During this step, a single customized last could be produced or a pair of corresponding customized lasts could be produced.

Following this, during step 484, an upper may be manufactured by associating the customized last with a braiding device. In particular, the customized last may be inserted through the braiding device to form a braided upper on the customized last. In some cases, the customized last could be manually inserted through the braiding device. In other cases, the customized last could be automatically inserted through the braiding device, using for example, a continuous last feeding system.

Next, during step 486, an operator can manufacture one or more overlays for the upper. Additionally, during optional step 486, an operator could manufacture one or more sole components that may be associated with the braided upper to form the final article of footwear. The overlays, and possibly also the sole components are created using an additive manufacturing method, such as 3-D printing.

After step 486, during a step 488, the braided upper formed using the customized last can be associated with any overlays and/or sole components. In some embodiments, the trim and/or sole components can be bonded to the upper using a welding device. In some embodiments, a lace or other fastener could also be added to the braided upper to form the finished article of footwear.

FIGS. 5-20 illustrate schematic views of various possible steps in the process of manufacturing an article of footwear using portable manufacturing system 100. This method may begin once a customer has been received at a capturing station, including either capturing station 200 depicted as disposed within housing interior 107 (shown in FIG. 5), or an alternative capturing station 400 depicted as disposed outside of housing interior 107 (shown in FIG. 6).

FIG. 5 illustrates a schematic view of a customer 270 standing at capturing station 200. In addition, operator 260 is working at nearby computing system 250 to control capturing station 200 so as to obtain customized foot information for manufacturing a customized last.

In the present embodiment shown in FIG. 5, customer 270 may enter portable housing 102 to begin the process of building a customized article of footwear using portable manufacturing system 100. Embodiments of portable housing 102 could include a rear trailer door (e.g., doors 109) and/or side doors that allow for entry and exit. Some embodiments could also include stairs, a ladder and/or a ramp that allow operators and/or customers to climb up to a door of portable housing 102.

In some embodiments, operator 260 may have customer 270 enter portable housing 102 in order to have customer 270 stand at capturing station 200, as shown in FIG. 5. At capturing station 200, customized information about a users foot may be captured during a first (or early) step in a process for manufacturing a customized article of footwear with portable manufacturing system 100.

As shown in FIGS. 5 and 6, in some embodiments, customized foot information may be retrieved using a capturing station to capture two-dimensional and/or three-dimensional information about a customer's foot. Of course it is also contemplated that in at least some embodiments, customized foot information could be captured with other sensing devices.

Capturing station 200 includes one or more sensing systems and/or sensing devices capable of sensing (e.g., capturing) customized foot information. In one embodiment of a capturing station, shown in FIG. 5, capturing station 200 includes at least two optical sensing devices and a marked region where a customer may stand. Specifically, capturing station 200 may include optical sensing device 202 and optical sensing device 204, which may act together to capture customized foot information, including the dimensions and/or shape of feet 271 of customer 270. Optical sensing devices may be any kind of device capable of capturing image information. Examples of different optical sensing devices that can be used include, but are not limited to: still-shot cameras, video cameras, digital cameras, non-digital cameras, web cameras (web cams), as well as other kinds of optical sensing devices known in the art. The type of optical sensing device may be selected according to factors such as desired data transfer speeds, system memory allocation, form factor of the optical sensing device, desired spatial resolution for viewing a foot, as well as possibly other factors.

Exemplary image sensing technologies that could be used with an optical sensing device include, but are not limited to: semiconductor charge-coupled devices (CCD), complementary metal-oxide-semiconductor (CMOS) type sensors, N-type metal-oxide-semiconductor (NMOS) type sensors as well as possibly other kinds of sensors. In some other embodiments, optical sensing devices that detect non-visible wavelengths (including, for instance, infrared wavelengths) could also be used.

For purposes of illustration, two cameras are depicted in FIG. 5. Such a configuration could allow for three-dimensional imaging using a stereoscopic imaging technique. However, other embodiments could utilize any other number of cameras. Moreover, other embodiments could be configured with any other kind of 3D scanning technologies including contact 3D scanning (e.g., coordinate measuring machine), time of flight 3D laser scanning, triangulation based 3D laser scanning as well as possibly other kinds of 3D scanning technologies.

Capturing station 200 also includes a positioning region 206. In some embodiments, positioning region 206 corresponds to a region where a user (e.g., a customer) may stand so that optical sensing device 202 and/or optical sensing device 204 can capture customized foot information. In some cases, positing region 206 may include indicia, such as the outlines of feet, intended to provide guidance for where a user should stand for optimal operation of model capturing station 200.

Although optical sensing device 202 and optical sensing device 204 are shown here in a static configuration, it is contemplated that in some embodiments optical sensing device 202 and/or optical sensing device 204 could be moved to various positions to capture additional views of feet 271. Optionally, in some embodiments, the method can include having a user (e.g., a customer) move to different orientations within positioning region 206.

In some embodiments, operator 260 controls capturing station 200 to capture customized foot information for feet 271 of customer 270. The captured customized foot information can be delivered to computing system 250 via a network (e.g., using networking device 252). Once received, the customized foot information may be stored as raw data. In the exemplary embodiment shown in FIG. 5, the customized foot information may be used to create a customized foot model 302. Customized foot model 302 may be a three-dimensional model that represents the size and/or geometric information about a user's foot. In the embodiment shown in FIG. 5, information about both feet may be captured simultaneously. However, in other embodiments, customized foot information may be captured for one foot at a time.

FIG. 6 illustrates an alternative configuration for a capturing station 400. In the embodiment shown in FIG. 6, capturing station 400 may be part of portable manufacturing system 100, but operated outside of housing interior 107 of portable housing 102. In some embodiments, capturing station 400 comprises a portable foot-scanning device 402 and a remote computing device 404. Portable foot-scanning device 402 could be any device known in the art for capturing information about a user's foot. Some embodiments could use any of the systems, devices and methods for imaging a foot as disclosed in Gregory et al., U.S. Patent Publication Number 2013/0258085, published October 3, 2013 and titled "Foot Imaging and Measurement Apparatus". Remote computing device 404 may be configured to receive information from foot-scanning device 402. In some embodiments, remote computing device 404 may be configured to relay information to one or more systems or devices within portable manufacturing system 100 (for example, using networking device 252). In at least some embodiments, remote computing device 404 could be a tablet device.

Alternatively, some embodiments could use foot scanning device 402 within portable housing 102, rather than outside of portable housing 102. Likewise, some other embodiments could use components of capturing station 200 (e.g., optical sensing device 202 and optical sensing device 204) outside of portable housing 102. Moreover, it is contemplated that in other embodiments any of the stations/systems of portable manufacturing system 100 could be operated within portable housing 102 or outside of portable housing 102. Specifically, each of additive manufacturing station 210, braiding station 220 and/or welding station 230 could be operated outside of portable housing 102 in some other embodiments.

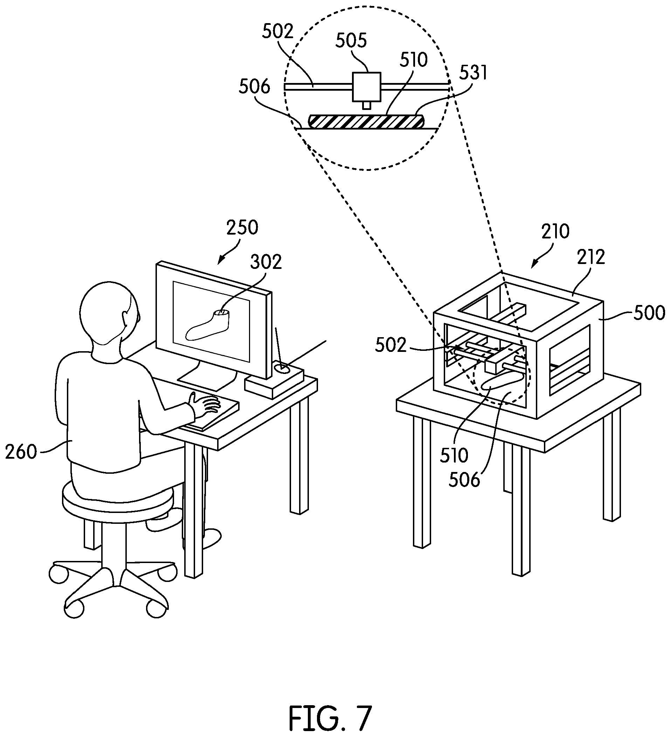

FIGS. 7-9 illustrate schematic views of steps in a process for manufacturing a customized last using additive manufacturing station 210. As shown in FIG. 7, operator 260 may control additive manufacturing device 212 of additive manufacturing station 210 using computing system 250. Additive manufacturing device 212 may include a device housing 500, an actuating assembly 502 and extrusion head 505. Additive manufacturing device 212 may also include platform 506. In some cases, extrusion head 505 may be translated via actuating assembly 502 on a z-axis (i.e., vertical axis), while platform 506 of additive manufacturing device 212 may move in the x and y directions (i.e., horizontal axis). In other cases, extrusion head 505 could have full three-dimensional movement (e.g., x-y-z movement) above a fixed platform.

As seen in FIGS. 7-9, the customized foot model 302, or the raw customized foot information captured (or otherwise retrieved) during previous steps, can be used to form a customized last 510. In some cases, customized foot model 302 or raw customized foot information is provided to additive manufacturing device 212 in the form of a 3D printing file format. In one embodiment, for example, customized model 302 and/or information associated with customized model 302 could be provided to additive manufacturing device 212 in an STL file format, which is a Stereolithography file format for 3D printing. In other embodiments, the information could be stored and/or transferred in the Additive Manufacturing File Format (AMF), which is an open standard for 3D printing information. Still other embodiments could store and/or transfer information using the X3D file format. In still other embodiments, any other file formats known for storing 3D objects and/or 3D printing information could be used.

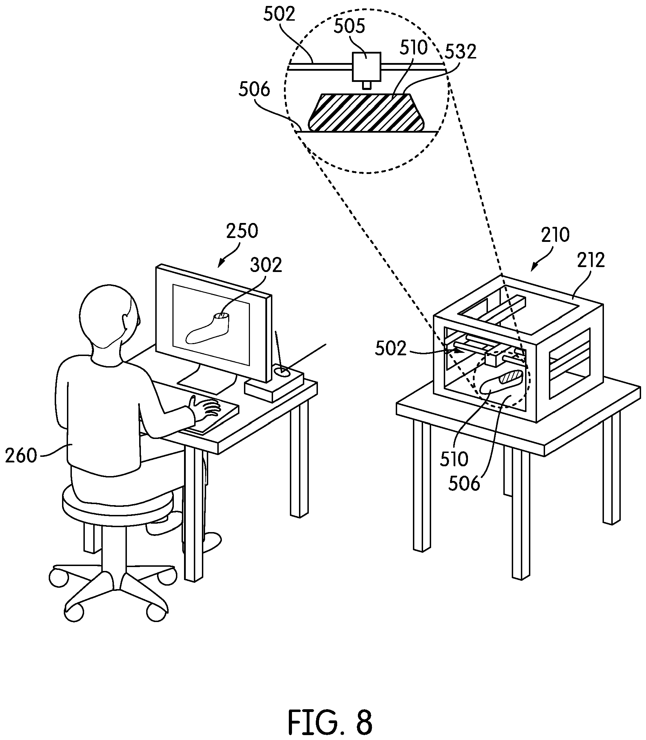

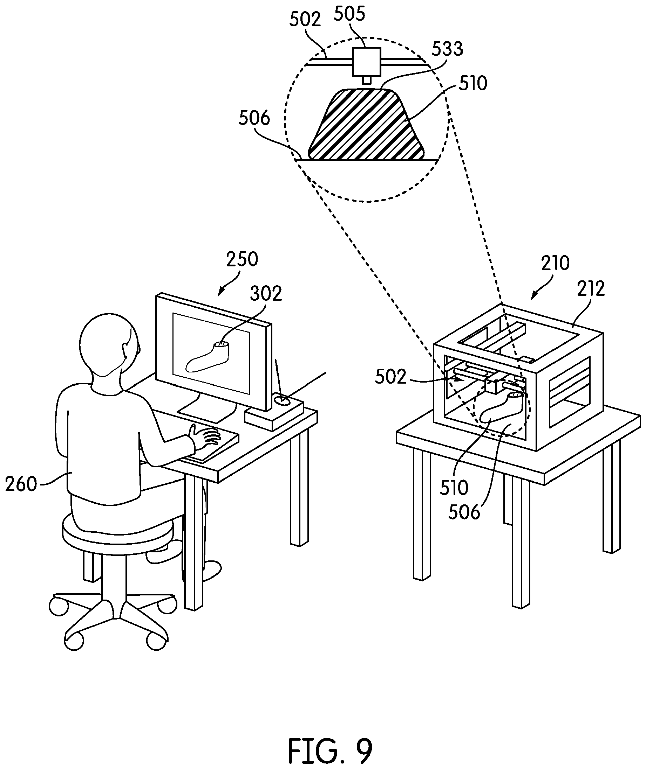

FIGS. 7-10 depict how customized last 510 is formed using additive manufacturing device 212. Specifically, customized last 510 is formed as extrusion head 505 lays down successive layers of material. For example, FIGS. 7-9 show a layer 531 (in FIG. 7), a layer 532 (in FIG. 8) and a layer 533 (in FIG. 9).

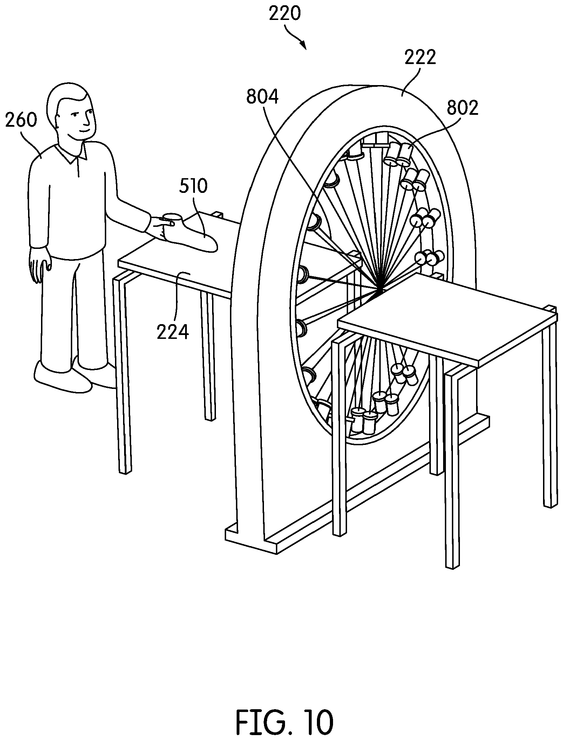

FIG. 10-14 depict schematic views of steps in an exemplary process for manufacturing an upper by inserting a customized last through a braiding machine.

It is contemplated that in some embodiments, prior to placing customized last 510 through braiding device 222, operator 260 may select a set of threads for loading onto braiding device 222. The selected set of threads could be selected according to customer preferences for article color, performance characteristics and/or comfort and fit characteristics. Optionally, the selected set of threads could be selected according to predetermined manufacturing considerations that may not be determined by the customer. For example, if the operator knows that the customer will be using the final article of footwear in a particular type of athletic activity, or a particular position in a sport, the operator may select threads with desirable performance characteristics corresponding to the athletic activity and/or position.

In the configuration shown in FIG. 10, spools 802 with threads 804 have been loaded onto braiding device 222. Upon bring the customized last 510 to braiding station 220, customized last 510 may be fed through braiding device 222 to form a braided upper. In some embodiments, customized last 510 may be manually fed through braiding device 222 by operator 260. In other embodiments, a continuous last feeding system can be used to feed customized last 510 through braiding device 222. The present embodiments could make use of any of the methods and systems for forming a braided upper disclosed in Bruce, U.S. Patent Publication Number 2015/0007451, now U.S. Patent Application Number 14/495,252, filed September 24, 2014, and titled "Article of Footwear with Braided Upper".

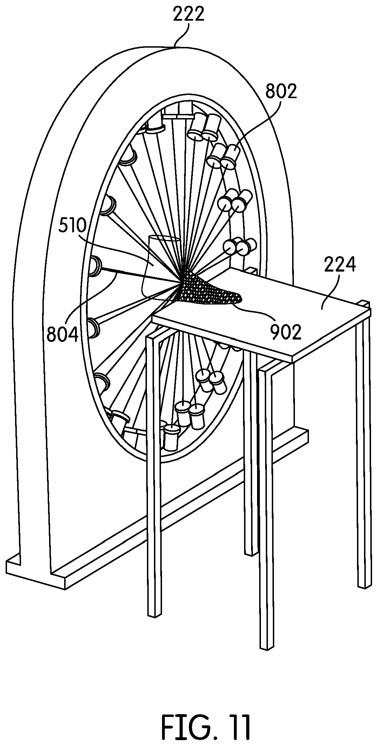

As shown in FIGS. 11-12, as customized last 510 is fed through braiding device 222, a braided footwear component 902 is formed around customized last 510. In this case, braided footwear component 902 comprises a continuously braided upper structure that conforms to customized last 510, and therefore has the approximate geometry of customized last 510.

It is contemplated that in at least some embodiments, a customized last could be configured with one or more portions that are distinct from the foot-shaped portion of the last. For example, a customized last could incorporate a flange, as disclosed in Bruce, U.S. Patent Publication Number US 2016 166 000 A, now U.S. Patent Application Number 14/565,682, filed December 10, 2014, and titled "Last System for Braiding Footwear". In some cases, a flange or similar component may facilitate coupling the last to a continuous last feeding system. In such embodiments, a customized last with a flange could be inserted through braiding device 222 and the excess braided portions formed around the flange could be cut and discarded prior to forming a finished article.

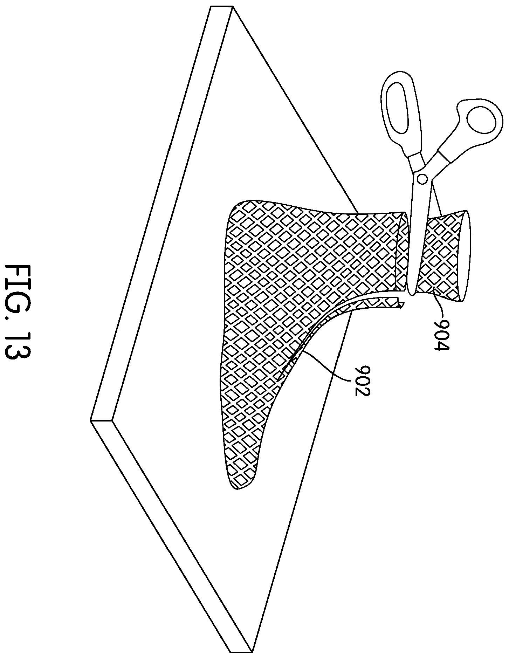

As schematically shown in FIGS. 13-14, after forming braided footwear component 902, a section 904 of braided footwear component 902 can be cut or otherwise removed to form an opening 910 in braided footwear component 902. In some cases, customized last 510 can be removed from opening 910, which may further serve as an opening for a foot.

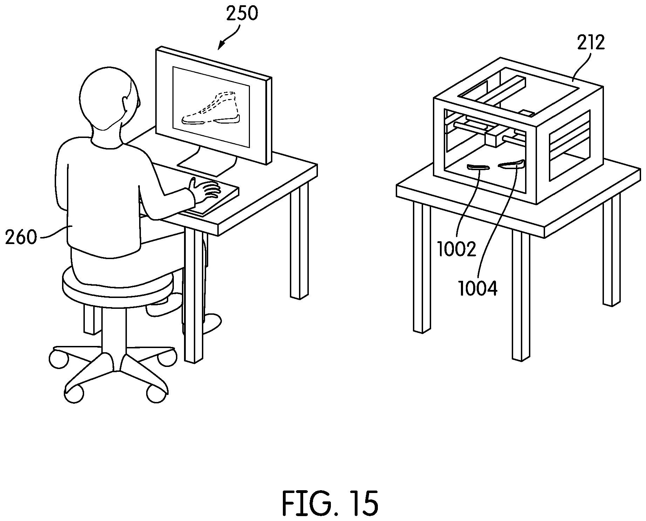

FIG. 15 illustrates a schematic view of a step of forming one or more sole components that may be assembled with braided footwear component 902 to form an article of footwear. As shown in FIG. 15, in some embodiments operator 260 may control additive manufacturing device 212 to print a first sole component 1002 and a second sole component 1004. In some cases, the size and/or shape of first sole component 1002 and second sole component 1004 can be determined according to the size and/or shape of customized foot model 302 (see FIG. 5), which provides a representation of the approximate size and shape of the customer's foot.

Alternatively, rather than create sole components using an additive manufacturing device, other embodiments could utilize stock sole components. Such components could be stored within portable housing 102. In some cases, sole components corresponding to various different sizes of footwear could be stored in portable housing 102 for assembly with a braided upper.

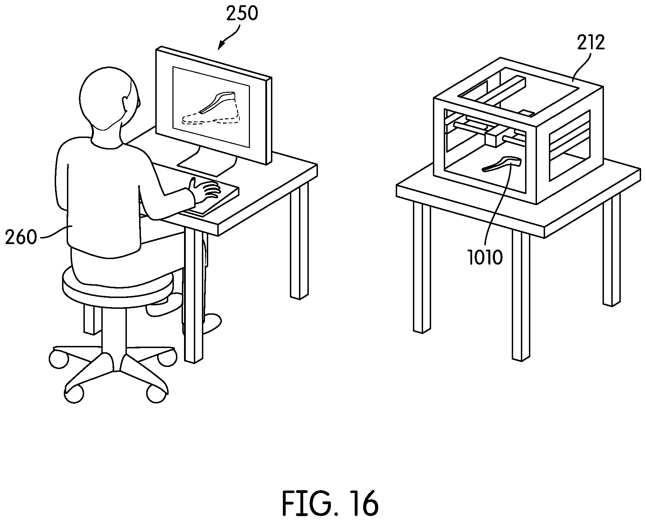

As shown in FIG. 16, some embodiments can also include provisions for manufacturing trim, overlay, or other components or portions of material for assembly with a braided footwear component. As used herein, the term "overlay" refers to any material layer that could be disposed over a layer of braided material, including braided material for an upper. Overlays could be comprised of any kinds of materials and may be configured with a variety of different characteristics (e.g., stretch, elasticity, density, weight, durability, breathability, etc.). Also, overlays could have any dimensions and could be configured to cover some portions and/or all portions of a braided component. Overlays could be disposed on an interior surface of a braided component and/or an exterior surface of a braided component. Embodiments could use any of the overlays, and/or methods for attaching overlays to braided components, disclosed in Bruce, U.S. Patent Publication Number 2014/0373389, now U.S. Patent Application Number 14/163,438, filed January 24, 2014, and titled "Braided Upper with Overlays for Article of Footwear".

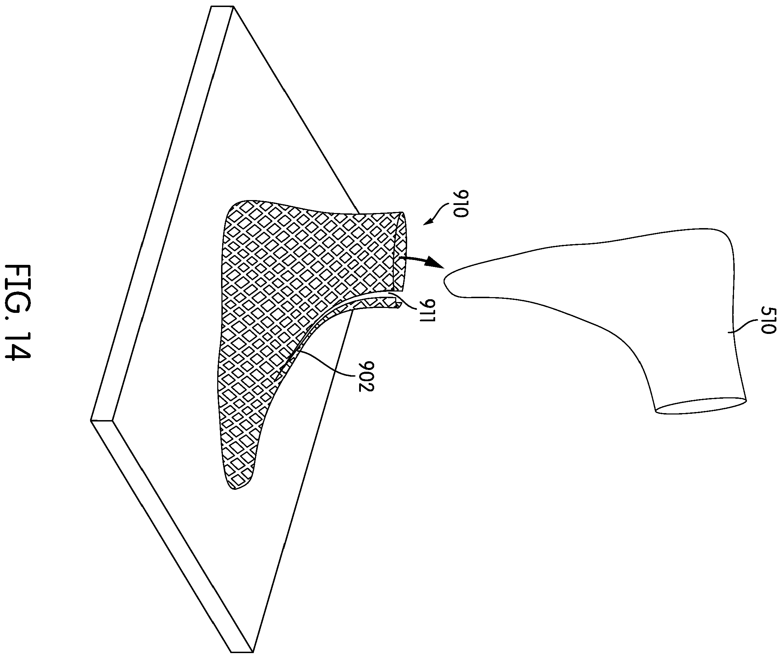

In FIG. 16, operator 260 can control additive manufacturing device 212 to print overlay component 1010. In this case, overlay component 1010 may provide an overlay or lining for opening 910 of braided footwear component 902 (see FIG. 14). In particular, since opening 910 has a cut edge 911, overlay component 1010 may be bonded to edge 911 to fix the ends of threads at edge 911 and to reinforce opening 910.

Alternatively, rather than create trim, or other material portions using an additive manufacturing device, other embodiments could utilize stock materials for trim and/or other portions. Such components could be stored within portable housing 102. In some cases, trim and/or overlay corresponding to various different sizes of footwear could be stored in portable housing 102 for assembly with a braided upper.

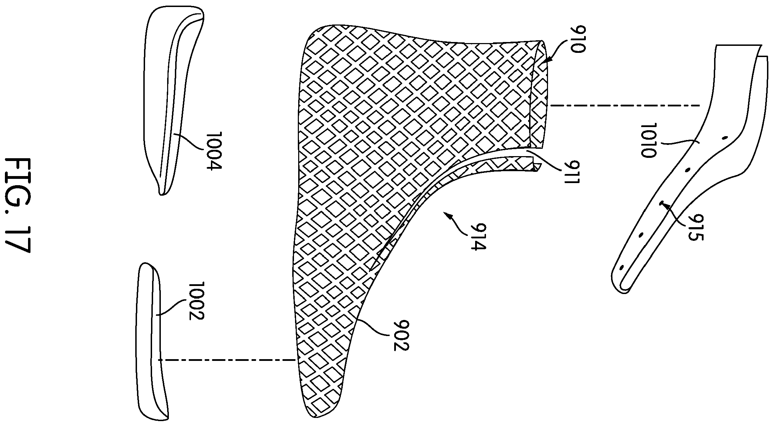

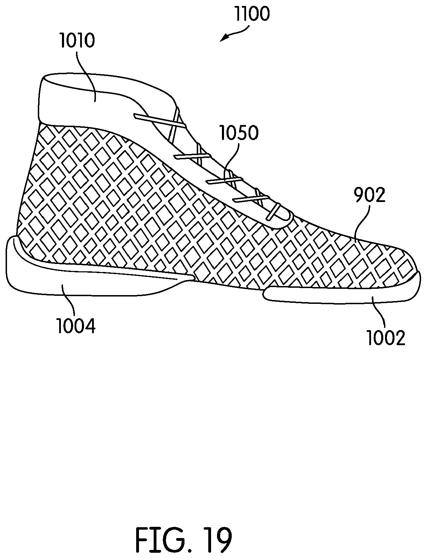

FIG. 17 illustrates a schematic exploded view of braided footwear component 902, first sole component 1002, second sole component 1004 and overlay component 1010. As seen in FIG. 17, in the exemplary embodiment, overlay component 1010 may be associated with opening 910, including edge 911. When assembled with braided footwear component 902, overlay component 1010 may extend through portions of lacing region 914 of braided footwear component 902. Moreover, in at least some embodiments, overlay component 1010 may further include eyelets 915 that may receive a lace (e.g., lace 1050, which is shown in FIG. 19).

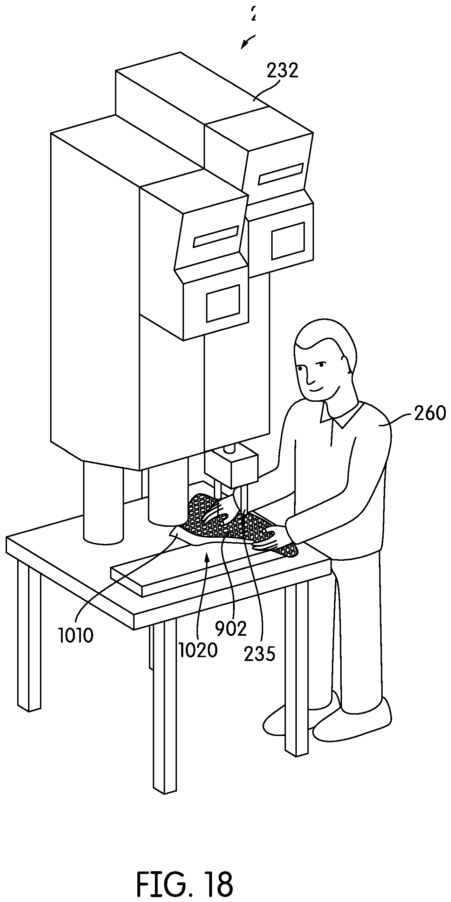

FIG. 18 illustrates a step of assembling overlay component 1010 with braided footwear component 902 to form upper 1020 that is comprised of overlay component 1010 and braided footwear component 902. In the exemplary embodiment, overlay component 1010 may be joined with braided footwear component 902 using a welding technique or method. Thus, in this case, operator 260 is seen to be working at welding station 230 to join overlay component 1010 and braided footwear component 902.

In the embodiment shown in FIG. 18, welding station 230 includes welding device 232. Further, welding device 232 includes at least one welding head 235. In one embodiment, welding device 232 could be an ultrasonic welding machine that uses ultrasonic welding to bond overlay component 1010 to braided footwear component 902. However, other embodiments could use any other kind of welding techniques known in the art, including various kinds of plastic welding techniques. These may include, but are not limited to: extrusion welding, contact welding, hot plate welding, high frequency welding, injection welding, ultrasonic welding, spin welding, laser welding as well as possibly other kinds of welding.

Optionally, in other embodiments, overlay component 1010 could be attached to braided footwear component 902 using any kind of adhesive. Still further, some embodiments may use an adhesive to initially hold overlay component 1010 in place on braided footwear component 902 and may then use welding device 232 to permanently bond overlay component 1010 to braided footwear component 902.

First sole component 1002 and second sole component 1004 could be attached to braided footwear component 902 using any known method for attaching sole structures to uppers, meshes, and/or braided layers. In some embodiments, first sole component 1002 and second sole component 1004 could be bonded to braided footwear component 902 using an adhesive such as a glue. It is also contemplated that in at least some embodiments, first sole component 1002 and/or second sole component 1004 could be welded to braided footwear component 902, if first sole component 1002 and/or second sole component 1004 are made of welding compatible materials.

FIG. 19 illustrates a schematic view of a finished article of footwear 1100. Article 1100 may include braided footwear component 902, overlay component 1010, first sole component 1002 and second sole component 1004. Additionally, in the exemplary embodiment, lace 1050 has been assembled with overlay component 1010 and braided footwear component 902 that may be used to adjust the size of braided footwear component 902.

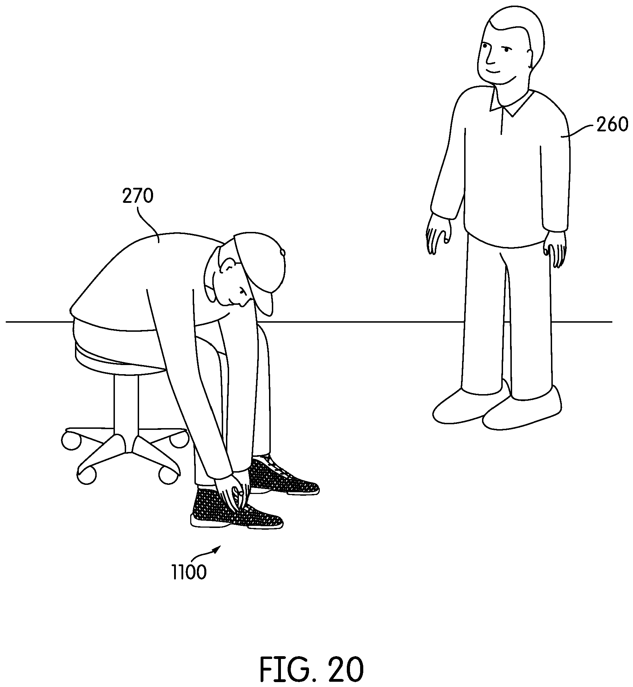

In FIG. 20, customer 270, from which customized foot information has been gathered in an earlier step, is seen putting on a pair of recently manufactured articles. Specifically, customer 270 is putting on article 1100, which may be manufactured using the process discussed above and shown in FIGS. 4-19. Thus, the exemplary portable manufacturing system 100 may be capable of producing articles of footwear that are customized to a customer's foot. Moreover, the production of the articles can occur relatively quickly, and may be as short as the combined time needed to capture customized foot information (using capturing station 200), print a customized last (using additive manufacturing device 212), form a braided footwear component over the customized last (using braiding device 222), print overlays and sole components and assembling the parts into a final article (using welding device 232). Although the time required for each step could vary in different embodiments, embodiments could provide a total manufacturing time of less than four hours. In at least some embodiments, the time required for each step may be selected so that the total manufacturing time is less than an hour. In still further embodiments, the total manufacturing time is less than thirty minutes.

The exemplary embodiments provide a portable manufacturing system and an associated method of use that may substantially reduce the number of distinct material components required for making an article of footwear. For example, some other systems and methods of making footwear may require anywhere from 30 to 100 distinct pieces of material to form a finished article of footwear. In contrast, the exemplary system and method discussed above and shown in the figures utilizes five distinct material components: a braided footwear component (e.g., upper), two sole components, an overlay component and a lace. Still other embodiments could utilize significantly more than five components (e.g., an article as disclosed above with additional overlay components, trim portions, and/or other elements).

Portable housing 102 could be moved, or transported, from one location to another location. Exemplary starting locations and/or destinations for portable housing 102 include various manufacturing facilities, retail locations (e.g., shoe and/or apparel stores), trade shows and/or conventions, sporting facilities (e.g., a stadium or practice facility for one or more sports teams), as well as possibly other locations. In embodiments where portable housing 102 is a semi-trailer, portable housing 102 could be towed to various different locations.

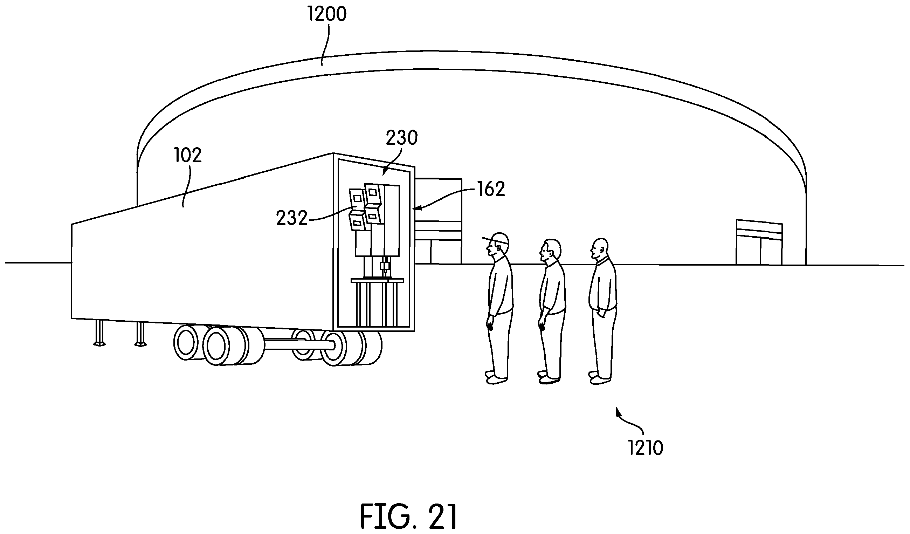

FIG. 21 illustrates an example of a situation where portable housing 102 could be used. Referring to FIG. 21, portable housing 102 may be transported to a stadium 1200 around a specific sporting event. Specifically, stadium 1200 may be a soccer stadium where fans are gathering before or after a match.

As seen in FIG. 21, several customers 1210 are lined up to have customized footwear produced using portable manufacturing system 100. In this case, customers 1210 may be interested in having customized articles manufactured with predetermined colors associated with a team playing in the match within stadium 1200. Alternatively, after attending a soccer game, some customers may wish to purchase customized soccer shoes (e.g., soccer cleats).

While various embodiments have been described, the description is intended to be exemplary, rather than limiting and it will be apparent to those of ordinary skill in the art that many more embodiments and implementations are possible that are within the scope of the embodiments. Accordingly, the embodiments are not to be restricted except in light of the attached claims. Also, various modifications and changes may be made within the scope of the invention, which is defined in the attached claims.

## Claims

1. A manufacturing system (100), comprising:
a sensing device (202, 204) for sensing customized foot information;
an additive manufacturing device (212);
a braiding device (222);
a welding device (232);
wherein the additive manufacturing device is configured to form a footwear last using the customized foot information and to form at least one overlay component (1010);
wherein the braiding device is configured to form a braided footwear component (902) on the footwear last; and
wherein the welding device is configured to bond the at least one overlay component to the braided footwear component formed using the braiding device.

2. The manufacturing system according to claim 1, wherein the manufacturing system comprises at least two optical sensing devices.

3. The manufacturing system according to claim 2, wherein the customized foot information includes information about a three-dimensional geometry of a foot.

4. The manufacturing system according to claim 3, wherein the sensing device, the additive manufacturing device, the braiding device and the welding device are all housed in a portable housing (102), the portable housing including a towing system (139).

5. The manufacturing system according to claim 4, wherein the portable housing is configured to be towed by a towing vehicle using the towing system.

6. A method of making an article of footwear (1100), comprising:
receiving information related to a three-dimensional model of a footwear last (480);
forming a footwear last (482) by an additive manufacturing process and forming (486) at least one overlay component (1100) by an additive manufacturing process, wherein the footwear last has a three-dimensional geometry corresponding to the three- dimensional model of a footwear last;
inserting (484) the footwear last through a braiding device to form a braided footwear component (902) on the footwear last;
bonding the at least one overlay component to the braided footwear component;
removing the braided footwear component from the footwear last; and
thereby making the article of footwear having the braided footwear component.

7. The method according to claim 6, wherein forming the footwear last includes printing the footwear last using a three-dimensional printer.

8. The method according to claim 6, wherein the method further includes capturing customized foot information from a foot, and wherein the method includes creating the three-dimensional model of a footwear last using the customized foot information.

9. The method according to claim 8, wherein capturing the customized foot information includes using at least two optical sensing devices (202, 204) to obtain images of the foot.

10. The method according to claim 8, wherein capturing the customized foot information includes using a foot scanning device (402) to capture information about a sole of the foot.

11. The method according to claim 6, wherein the method further includes assembling a sole component with the braided footwear component (488).

12. The method according to claim 6, wherein bonding the overlay component to the braided footwear component includes welding the overlay component to the braided footwear component.

13. The method according to claim 6, wherein the braiding device is configured to over-braid strands of material onto the footwear last.

## Patentansprüche

1. Herstellungssystem (100), umfassend:
eine Erfassungsvorrichtung (202, 204) zum Erfassen individualisierter Fußdaten;
eine additive Herstellungsvorrichtung (212);
eine Flechtvorrichtung (222);
eine Schweißvorrichtung (232);
worin die additive Herstellungsvorrichtung dafür konfiguriert ist, eine Schuhleiste unter Verwendung der individualisierten Fußdaten zu formen und mindestens eine Overlay-Komponente (1010) zu formen;
worin die Flechtvorrichtung dafür konfiguriert ist, eine geflochtene Schuhkomponente (902) auf der Schuhleiste zu formen; und
worin die Schweißvorrichtung dafür konfiguriert ist, die mindestens eine Overlay-Komponente mit der unter Verwendung der Flechtvorrichtung geformten geflochtenen Schuhkomponente zu verkleben.

2. Herstellungssystem nach Anspruch 1, worin das Herstellungssystem mindestens zwei optische Erfassungsvorrichtungen umfasst.

3. Herstellungssystem nach Anspruch 2, worin die individualisierten Fußdaten Angaben zu einer dreidimensionalen Geometrie eines Fußes beinhalten.

4. Herstellungssystem nach Anspruch 3, worin die Erfassungsvorrichtung, die additive Herstellungsvorrichtung, die Flechtvorrichtung und die Schweißvorrichtung alle in einem tragbaren Gehäuse (102) untergebracht sind, wobei das tragbare Gehäuse ein Schleppsystem (139) beinhaltet.

5. Herstellungssystem nach Anspruch 4, worin das tragbare Gehäuse dafür konfiguriert ist, von einem Schleppfahrzeug unter Verwendung des Schleppsystems geschleppt zu werden.

6. Verfahren zur Herstellung eines Schuhartikels (1100), umfassend:
Entgegennehmen von Angaben betreffend ein dreidimensionales Modell einer Schuhleiste (480);
Formen einer Schuhleiste (482) durch ein additives Herstellungsverfahren und Formen (486) mindestens einer Overlay-Komponente (1100) durch ein additives Herstellungsverfahren, worin die Schuhleiste eine dreidimensionale Geometrie entsprechend dem dreidimensionalen Modell einer Schuhleiste aufweist;
Einführen (484) der Schuhleiste durch eine Flechtvorrichtung, um eine geflochtene Schuhkomponente (902) auf der Schuhleiste zu formen;
Verkleben der mindestens einen Overlay-Komponente an der geflochtenen Schuhkomponente;
Entfernen der geflochtenen Schuhkomponente von der Schuhleiste; und, dadurch, Herstellen des Schuhartikels, der die geflochtene Schuhkomponente aufweist.

7. Verfahren nach Anspruch 6, worin das Formen der Schuhleiste das Drucken der Schuhleiste unter Verwendung eines dreidimensionalen Druckers beinhaltet.

8. Verfahren nach Anspruch 6, worin das Verfahren ferner das Erfassen individualisierter Fußdaten eines Fußes beinhaltet und worin das Verfahren das Erstellen des dreidimensionalen Modells einer Schuhleiste unter Verwendung der individualisierten Fußdaten beinhaltet.

9. Verfahren nach Anspruch 8, worin das Erfassen der individualisierten Fußdaten das Verwenden mindestens zweier optischer Erfassungsvorrichtungen (202, 204), um Bilder des Fußes zu erhalten, beinhaltet.

10. Verfahren nach Anspruch 8, worin das Erfassen der individualisierten Fußdaten das Verwenden einer Fußabtastvorrichtung (402) zum Erfassen von Angaben zur Sohle eines Fußes beinhaltet.

11. Verfahren nach Anspruch 6, worin das Verfahren ferner das Zusammenfügen einer Sohlenkomponente mit der geflochtenen Schuhkomponente (488) beinhaltet.

12. Verfahren nach Anspruch 6, worin das Verkleben der Overlay-Komponente an der geflochtenen Schuhkomponente das Verschweißen der Overlay-Komponente an der geflochtenen Schuhkomponente beinhaltet.

13. Verfahren nach Anspruch 6, worin die Flechtvorrichtung dafür konfiguriert ist, Materiallitzen auf der Schuhleiste zu umflechten.

## Revendications

1. Système de fabrication (100), comprenant :
un dispositif de détection (202, 204) pour détecter une information de pied personnalisée ;
un dispositif de fabrication additive (212) ;
un dispositif de tressage (222) ; un dispositif de soudage (232) ;
le dispositif de fabrication additive étant configuré pour former une forme d'article chaussant au moyen de l'information de pied personnalisée et pour former un composant de superposition (1010) ;
le dispositif de tressage étant configuré pour former un composant d'article chaussant tressé (902) sur la forme d'article chaussant ; et le dispositif de soudage étant configuré pour lier l'au moins un composant de superposition au composant d'article chaussant tressé formé au moyen du dispositif de tressage.

2. Système de fabrication selon la revendication 1, le système de fabrication comprenant au moins deux dispositifs de détection optique.

3. Système de fabrication selon la revendication 2, dans lequel l'information de pied personnalisée inclut une information sur une géométrie tridimensionnelle d'un pied.

4. Système de fabrication selon la revendication 3, dans lequel le dispositif de détection, le dispositif de fabrication additive, le dispositif de tressage et le dispositif de soudage sont tous logés dans un boîtier portable (102), le boîtier portable comprenant un système de remorquage (139).

5. Système de fabrication selon la revendication 4, dans lequel le boîtier portable est configuré pour être remorqué par un véhicule de remorquage au moyen du système de remorquage.

6. Procédé de fabrication d'un article chaussant (1100), le procédé comprenant :
recevoir une information relative à un modèle tridimensionnel d'une forme d'article chaussant (480) ;
former une forme d'article chaussant (482) par un processus de fabrication additive et former (486) au moins un composant de superposition (1100) par un processus de fabrication additive, l'article chaussant ayant une géométrie tridimensionnelle correspondant au modèle tridimensionnel d'une forme d'article chaussant ;
insérer (484) la forme d'article chaussant par l'intermédiaire d'un dispositif de tressage pour former un composant d'article chaussant tressé (902) sur la forme d'article chaussant ;
lier l'au moins un composant de superposition au composant d'article chaussant tressé ;
retirer le composant d'article chaussant tressé de la forme d'article chaussant ; et
fabriquer ainsi l'article chaussant ayant le composant d'article chaussant tressé.

7. Procédé selon la revendication 6, dans lequel la formation de la forme d'article chaussant consiste à imprimer la forme d'article chaussant au moyen d'une imprimante tridimensionnelle.

8. Procédé selon la revendication 6, le procédé consistant en outre à capturer une information de pied personnalisée à partir d'un pied, et le procédé consistant à créer le modèle tridimensionnel d'une forme d'article chaussant au moyen de l'information de pied personnalisée.

9. Procédé selon la revendication 8, dans lequel la capture de l'information de pied personnalisée consiste à utiliser au moins deux dispositifs de détection optique (202, 204) pour obtenir des images du pied.

10. Procédé selon la revendication 8, dans lequel la capture de l'information de pied personnalisée consiste à utiliser un dispositif scanneur de pied (402) pour capturer une information sur une plante du pied.

11. Procédé selon la revendication 6, le procédé consistant en outre à assembler un composant de semelle avec le composant d'article chaussant tressé (488).

12. Procédé selon la revendication 6, dans lequel la liaison du composant de superposition au composant d'article chaussant tressé consiste à souder le composant de superposition au composant d'article chaussant tressé.

13. Procédé selon la revendication 6, dans lequel le dispositif de tressage est configuré pour sur-tresser des brins de matériau sur la forme d'article chaussant.
